Europäisches Patentamt

European Patent Office

Office européen des brevets

(11) Publication number: **0 211 844**
**B1**

# EUROPEAN PATENT SPECIFICATION

(45) Date of publication of patent specification: **19.09.90**

(51) Int. Cl.⁵: **B 23 K 9/12, B 23 K 9/02**

(21) Application number: **85902250.1**

(22) Date of filing: **11.04.85**

(86) International application number:
**PCT/US85/00629**

(87) International publication number:
**WO 86/04846 28.08.86 Gazette 86/19**

(54) **ADAPTIVE WELDING APPARATUS HAVING FILL CONTROL CORRECTION FOR CURVILINEAR WELD GROOVES.**

(30) Priority: **25.02.85 US 705151**

(43) Date of publication of application:
**04.03.87 Bulletin 87/10**

(45) Publication of the grant of the patent:
**19.09.90 Bulletin 90/38**

(84) Designated Contracting States:
**AT BE DE FR GB NL SE**

(56) References cited:
**EP-A-0 035 423**
**DE-A- 375 855**
**FR-A-2 397 916**
**GB-A-2 104 652**
**US-A-4 493 968**

(73) Proprietor: **CATERPILLAR INC.**
**100 Northeast Adams Street**
**Peoria Illinois 61629-6490 (US)**

(72) Inventor: **BROWN, Ronald, D.**
**4741 Sir Lancelot Court**
**Mapleton, IL 61547 (US)**

(74) Representative: **Brunner, Michael John et al**
**GILL JENNINGS & EVERY 53-64 Chancery Lane**
**London WC2A 1HN (GB)**

Courier Press, Leamington Spa, England.

## Description

This invention relates generally to an adaptive welding apparatus for sensing the cross sectional area of a curvilinear weld groove and controlling at least one of the weld voltage, wire feed speed, and welding torch travel speed to fill the weld groove and, more particularly, for correcting ambiguities in the sensed cross sectional area due to a skewed sensing path which does not orthogonally traverse the weld groove.

In the field of adaptive welding, it is of paramount importance to accurately control the weld voltage, wire feed speed, and welding torch travel speed to maintain a desired weld material deposition rate. The cross sectional area of a weld groove is directly tied to the deposition rate and, therefor, it is necessary to precisely determine the groove area and adjust the weld parameters accordingly. Measurements are taken on a periodic basis along the weld groove to account for changes known to occur in weld groove areas. These measurements are accomplished by scanning a sensing element (e.g., optical, inductive, capacitive, etc.) along a path extending across the weld groove and detecting the cross sectional configuration. The groove area is then determined from the cross section. This method of controlling fill characteristics has worked well in conjunction with linear weld grooves, consistently filling grooves to the proper level within the physical limitations of the welder and ardently avoiding the obvious problems associated with underfilling a weld groove.

Welding apparatus for carrying out the above method is disclosed in US—A—4493968, the apparatus guiding a welding torch along a weld groove, scanning a laser sensor along a pathway across the weld groove, so as to continuously analyse the groove characteristics, and adaptively controlling the deposition rate and voltage.

However, problems of equal import arise when this system is used on a curvilinear weld gorove. In a curved portion of the groove, the actual path scanned by the sensing element will be skewed from the desired scan path which orthogonally transverse the groove. By crossing the groove at a skewed angle, the sensor detects a larger weld groove than actually exists. The erroneously large weld groove causes the system to adjust the welding parameters to an unnecessarily large weld material deposition rate, overfilling the weld grooves.

The denigrating effect of overfilling weld grooves extends beyond the loss of aesthetic value; however many companies spend tremendous amounts of time, money, and effort on grinding off the excess weld material purely for appearance sake. Further, industries involved in steel fabrication allocate a significant portion of available funds directly to the purchase of consumable weld material. A small percentage savings realized by not overfilling weld grooves translates into a large recurring dollar savings on an annual basis. Moreover, overfilling weld grooves can result in a poor fit between parts and an excessive scrap or rework rate.

The present invention concerns apparatus and a method which are directed to overcoming one or more of the problems as set forth above.

In accordance with one aspect of the present invention, a welding apparatus for guiding a welding torch along a weld groove, scanning a sensor along a preselected pathway extending across the weld groove at a preselected distance from the welding torch, and adaptively controlling at least one of a weld voltage, wire feed speed, and welding torch travel speed in response to the scanned weld groove cross-sectional area, comprising:

first means for delivering first signals in response to the position and configuration of the weld groove cross section;

second means for receiving the first signals, calculating the weld groove cross sectional area, and delivering a second signal in response to the magnitude of the calculated area;

means for calculating on the basis of the signals from the first means, the coordinates of a series of guidance points each representing a portion of the weld groove ahead of the torch;

third means for receiving the second signal, calculating the magnitude of a first angle formed by the intersection of a preselected reference line and a first line extending through the most recently determined guidance point and a previously determined guidance point, calculating the magnitude of a second angle formed by the intersection of the preselected reference line and a second line extending through the most recently determined guidance point and the current welding torch location, calculating a general angular deviation from the difference between the first and second angles, altering the second signal in response to the magnitude of the angular deviation, and delivering a resulting third signal; and

fourth means for receiving the third signal and controlling the volume of weld material subsequently deposited in the weld groove adjacent to the current guidance point in response to the third signal.

Previous adaptive welding apparatus have been primarily concerned with the fill characteristics of linear weld grooves, with little or no consideration to the skewing effect of the sensing element during the tracking and welding of curvilinear weld grooves. Neglecting this phenomena leads to weld grooves which are overfilled and display less than ideal weld characteristics. The present invention is directed to an apparatus for providing the proper weld metal deposition rate for curvilinear weld grooves as well as linear weld grooves.

The invention also includes a welding method which includes guiding a welding torch along a weld groove, scanning a sensor along a preselected pathway extending across the weld groove at a preselected distance from the welding torch, and adaptively controlling at least one of a weld voltage, wire feed speed, and welding torch travel speed in response to the scanned weld groove cross-sectional area, the method comprising:

calculating the coordinates of a series of guidance points each representing a portion of the weld groove ahead of the torch;

detecting the apparent cross-sectional area of the weld groove;

calculating the magnitude of a first angle formed by the intersection of a preselected reference line and a first line extending through the most recently determined guidance point and a previously determined guidance point;

calculating the magnitude of a second angle formed by the intersection of the preselected reference line and a second line extending through the most recently determined guidance point and the current welding torch location;

calculating a general angular deviation from the difference between the first and second angles; and

controlling the volume of weld material subsequently deposited in the weld groove adjacent to the current guidance point in response to the third signal.

An example of the present invention will now be described with reference to the accompanying drawings, in which:—

Fig. 1 is a block diagram of an adaptive welding system embodying the invention;

Fig. 2 is a detailed drawing representing the light spot and TV scanning functions of the optical apparatus in the system of Fig. 1;

Fig. 2A is a representation of a digital weld groove scan using the apparatus of Fig. 1 in the scanning mode suggested by Fig. 2;

Fig. 3 is a detailed block diagram of an interface between the optical system and a data processor embodiment of Fig. 1;

Figs. 4 and 4a are flowcharts of a portion of the "TRACK" software used in the preferred implementation of the apparatus;

Figs. 5 and 5A are flowcharts of a portion of the "FILCTL" software used in the preferred implementation of the apparatus;

Fig. 6 is a stylized top view of a welding groove and the angular relationship between the welding torch, optical system, and weld groove;

Fig. 7 is a side view of a carriage apparatus for certain optical and mechanical components of the Fig. 1 embodiment; and

Fig. 8 is a perspective drawing of a three axis welding apparatus.

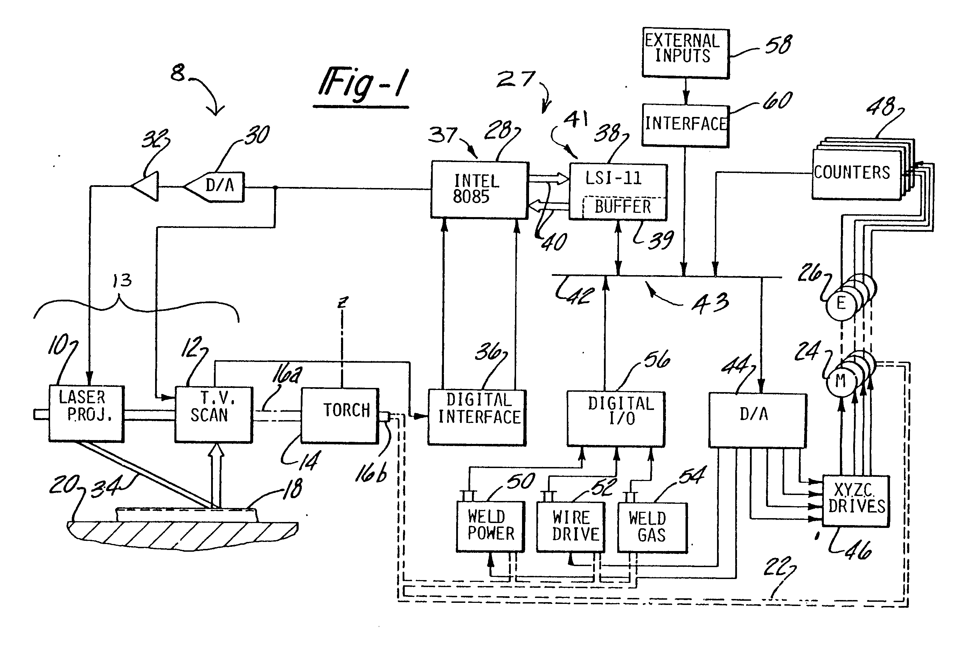

An adaptive welding apparatus 8 for guiding a welding torch 14 along a welding groove is shown in Fig. 1. A laser projector 10 and a raster-scanning type TV camera 12, such as General Electric TN 2500, make up sensor 13 and are mounted along with the MIG-type wire welding torch 14 on a movable platform 16a, 16b for controlled motion relative to a workpiece 18 which lies on a fixed support 20. The support 20 lies within a three-axis (Cartesian) coordinate system of which the Z or vertical axis extends along the centerline of the torch 14. The break between platform portions 16a and 16b indicates a fourth degree of freedom so that the projector 10 and scanner 12 can rotate or "swing" about the Z-axis and the sensor 13 can follow a weld groove without disturbing the X, Y coordinates of the torch.

The platform 16 is mechanically connected, as represented at 22, to axis drive motors 24 which move the platform 16 in the desired direction, to the desired degree and at the desired rate in following a weld groove in the workpiece 18. Encoders 26 monitor the extent and direction of rotation of the motors 24 in the conventional servo-positioning fashion and keep track of the relationship between commanded positions and actual positions of the platform 16 along the X, Y, Z axes and about the Z axis.

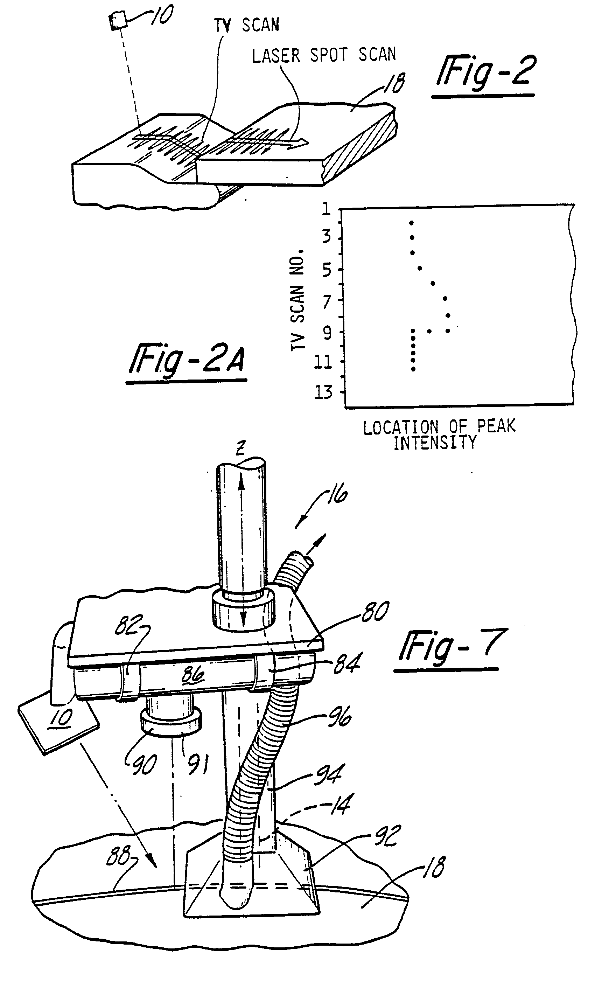

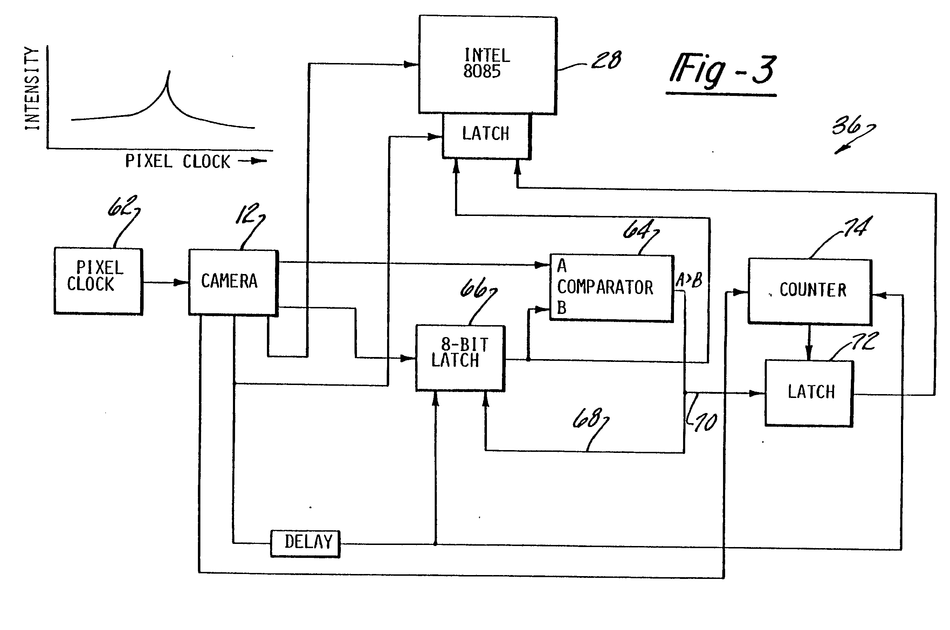

A first means 27 moves a sensing element 29 along a preselected pathway which extends across the weld groove, senses the weld groove cross sectional configuration, and delivers signals in response to the position and configuration of the weld groove cross section. The first means 27 can include, for example, an Intel 8085 digital computer 28 connected through a digital-to-analog converter 30 and amplifier 32 to a galvanometer-type mirror drive means in the projector 10 which causes a beam 34 of monochromatic light to be projected at an angle onto the workpiece 18 forming a spot of laser light which moves linearly across the weld groove at a controlled rate, as hereinafter described in more detail with reference to Figs. 2 and 3. The reflection of the beam 34 from the surface of the workpiece 18 is received by the TV-camera scanner 12, also described in more detail with reference to Figs. 2 and 3, and produces a digital data stream which is operated on by the interface 36 which provides data to the Intel 8085 computer 28 representing the peak intensity locations of the laser beam reflection at controlled time intervals. Those skilled in the art of noncontacting sensor design will recognize that other types of sensing elements 29 such as inductive, capacitive, or other optical designs can be used without departing from the spirit of the invention.

A second means 37 receives the signals representing peak intensity locations, determines relative locations of preselected points on said weld groove, calculates the weld groove cross sectional area, and delivers a second signal in response to the magnitude of the calculated area. The second means 37 can include, for example, a portion of the software used by the Intel computer 28 which generates a set of ten signals and provides these signals to a third means 41 via an RS-232C data link 40. The ten signals are:

(1) position of center of groove area along the laser scan;
(2) position of left edge of the groove;
(3) position of right edge of the groove;
(4) height of left edge;
(5) height of right edge;
(6) depth of groove;

(7) area of groove;
(8) check sum;
(9) end of message and
(10) sync signal.

A computer 38 is connected via a bus 42 to the D/A converter 44 and provides signals to the X, Y, Z, and C (swing) axis drives 46 which operate the motors 24 and guide the torch 14 within the weld groove. The scanner 12 looks ahead of the torch 14 by a preselected distance, for example, in the embodiment shown, the scanner 12 precedes the torch 14 by a distance segment of about 4 inches; consequently, a store of about 20 position commands, each representing a portion of the 4 inch segment (e.g. approximately .2 inches), is placed in a ring-buffer 39 in the computer 38 and output to the axis drives 46 on a FIFO basis which moves the platform 16 at the desired rate and in the appropriate direction. In addition to controlling the lateral positioning of the weld torch 14, the average of the Z coordinates of the left and right weld groove edges provides a vertical guidance point toward which the torch 14 is directed by the computer 38. Counters 48 maintain a current count of position-increment pulses from the encoders 26 which represent the current position of the torch 14 and platform 16 wihtin the coordinate system. This data is fed back to the computer 38 via the bus 42 and compared to position commands and generate error signals in conventional servo fashion.

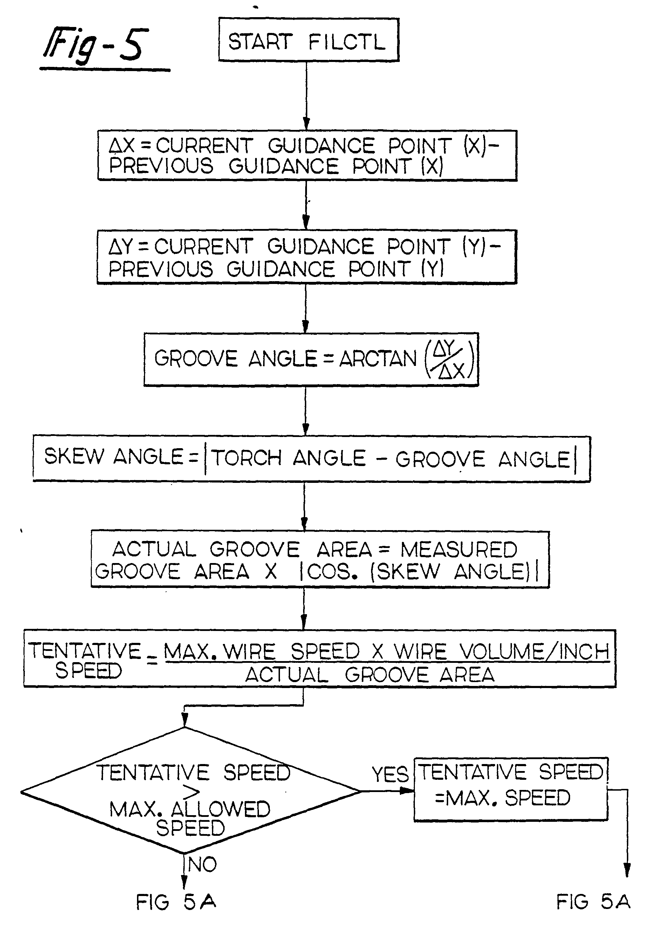

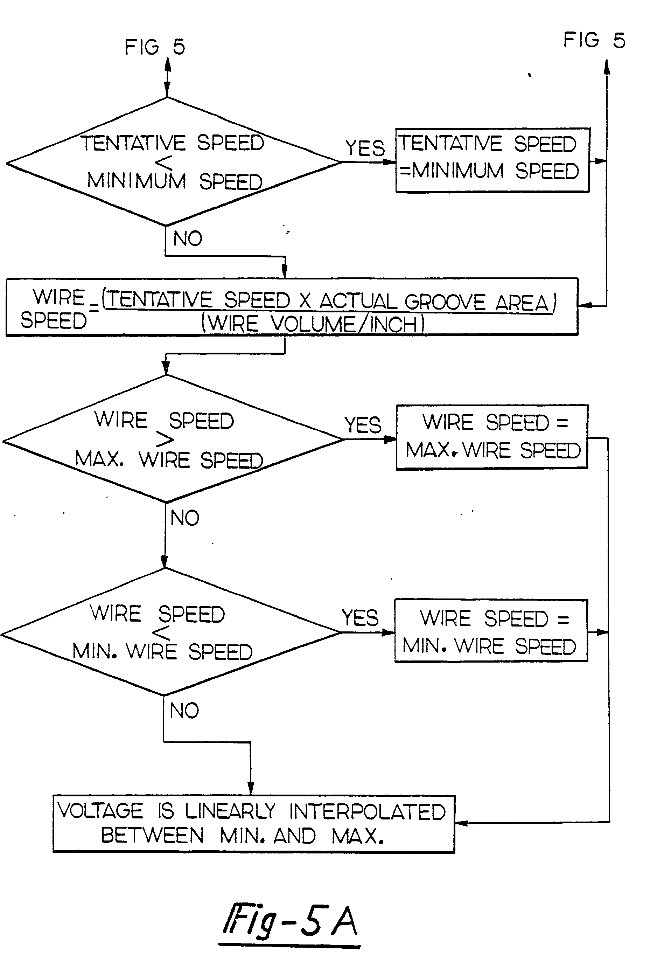

The third means 41 receives the second signal, calculates a general angular deviation of the scanned pathway from a line perpendicular to the weld groove, alters the second signal in response to the magnitude of the angular deviation, and delivers a resulting third signal. The third means 41 can include, for example, a portion of the software used by the computer 38 and described in greater detail in conjunction with the flowcharts of Fig. 5.

A fourth means 43 receives the third signal and controls the volume of weld material deposited in the weld groove in response to the third signal. The fourth means 43 can include, for example, a portion of the software used by the computer 38 which provides weld-fill control signals via a converter 44 to a weld power controller 50 and a wire drive unit 52 varying the welding parameters according to a desired end result, e.g. to achieve a certain pre-established fill percentage. The controller 50, wire drive unit 52 and a welding gas control solenoid 54 all have on-off controls, such as pushbuttons, which are connected via an I/O unit 56 to the bus 42 and advise the computer 38 that these units are or are not in condition for control by the computer 38. Although shown in the drawing as being on the units themselves, the on-off pushbuttons are preferably mounted on a remote control panel.

Conventional external inputs such as jog, tape drive, and keyboard inputs may be entered via a unit 58 and an interface 60 associated therewith.

The simultaneous, coordinated control of the tracking and weld-fill functions is an important feature of the system as it provides not only variability in the selection of weld characteristics, but also compensates for relatively wide variations in the groove itself. For example, parts are commonly held together prior to final welding by manually placing a number of tack welds along the groove. The present system senses the material build-up of these tack welds as variations in weld area and varies the deposition rate in the area of each tack and prevents overfilling. Moreover, the vertical guidance point is unaffected by changes in the area or depth of the weld groove and maintains the torch 14 at the average height of the left and right groove edges. This action provides the added benefit of "burning through" or melting the previous tack welds and provides better welding characteristics without over-filling the existing groove. Systems which maintain the welding torch 14 at a constant height above the bottom of the groove will raise the torch 14 over tack welds providing less than ideal welds.

Referring now to Figs. 2 and 2A, the spatial and timing characteristics of the projection and scanning operations provided by the units 10 and 12 are explained. The laser beam is projected onto the workpiece 18 at an angle of about 25—30 degrees from vertical as measured in a plane generally parallel to the groove. The spot is caused to travel a path across the groove, i.e., the beam sweeps through a second plane which intersects the weld groove. Through the aforementioned galvanometric mirror drive means 33, the spot is then returned to the beginning position at a rapid rate and scanned across the groove repetitively. Since the platform 16 is typically moving along the groove, the resulting pattern is a series of parallel stripes across the groove, each being spaced apart in the direction of platform travel.

The TV-scanner camera 12, on the other hand, has a viewing axis which is essentially vertical and a raster scan sensor-strobe function which cuts across the laser spot scan at right angles. Because of the 25—30 degree difference between the projection angle and the viewing angle, the point along any given raster scan at which the TV camera scanner intercepts the laser spot is related to the length of the optical path from the projector 10 to the reflection surface and, hence, to the depth of the groove. This point of interception is determined on the basis of reflected light intensity, i.e., intensity is greatest at the intercept point. The result is a series of digital signals which, taken in their entirety, represent the groove profile over a given laser scan or, if desired, over a series of such scans.

It will, of course, be noted that the scan rate of the TV camera 12 is much higher than that of the projector 10, i.e., the camera scan path cuts across the laser spot path many times during each increment of laser spot movement. In an actual embodiment, the camera 12 exhibits a 248×244 pixel array and three complete scans of the array (each scan being hereinafter termed a "frame") occur for each sweep of the laser spot.

However, this ratio of frames per spot sweep may be varied from 1:1 to 4:1 or more which alters the signal-to-noise ratio of the input signal to the camera 12. The variation is readily achieved via the programming of the Intel computer 28.

Fig. 3 illustrates the digital interface 36 in greater detail. This unit presents a series of signals to the Intel computer 28 from which the coordinates of the workpiece surface can be derived at spaced points along the laser spot scan path. From this information, the computer 28 determines the value of the first seven of the output quantities by mathematical calculation.

More specifically, the interface unit 36 provides a digital number (8-bits) representing the pixel clock count at which the camera raster scan intercepts the laser spot during each of the passes of the scan path represented in Fig. 2. By eliminating all pixel counts except the count which represents an interception and, therefor, an actual groove depth, the interface reduces the data processing function of the computer 28 to a significant degree.

The pixel clock 62 effectively strobes the pixels of the sensor array in the camera 12 and scans across the laser path. Each pixel output is effectively a measure of the intensity of the reflected laser light received by that pixel and is applied to one input of a comparator 64 and to an 8-bit latch 66. As long as each new pixel signal (A) is greater than the previous signal (B), the output on line 68 enables the latch 66 which receives and stores the new signal for reference on the next count. The output on line 68 also advances, via line 70, the count stored in the latch 72 from the counter 74. Recognizing that the laser spot reflection spreads appreciably, the pixel outputs continually increases in intensity as long as the camera scan is approaching the center of the reflection. After the center is passed, the intensity of the signals begin to fall off and the condition A>B is not satisfied and the count in latch 72 is not advanced. The stored count remains, therefor, at a number representing the Z coordinate of the work surface at which the intercept occurred. At the end of each camera scan line, an "EOL" signal strobes the count from the latch 72 into the computer 28 as a peak position count and, after a short delay, resets the counter 74 and clears the latch 66. An end-of-frame (EOF) signal from the camera 12 is input to the computer 28 and establishes the portion of the laser spot path which has been examined and digitized (in the preferred embodiment, one-third).

Software involves two major divisions; VIZ, the camera data analysis routine carried out by the Intel 8085, and the track and fill control function carried out by the LSI-11. In addition, the software-controlled functions of the LSI-11 are subdivided into several subroutines, the most important of which are, for example, TRACK, SWING, and FILCTL (fill control).

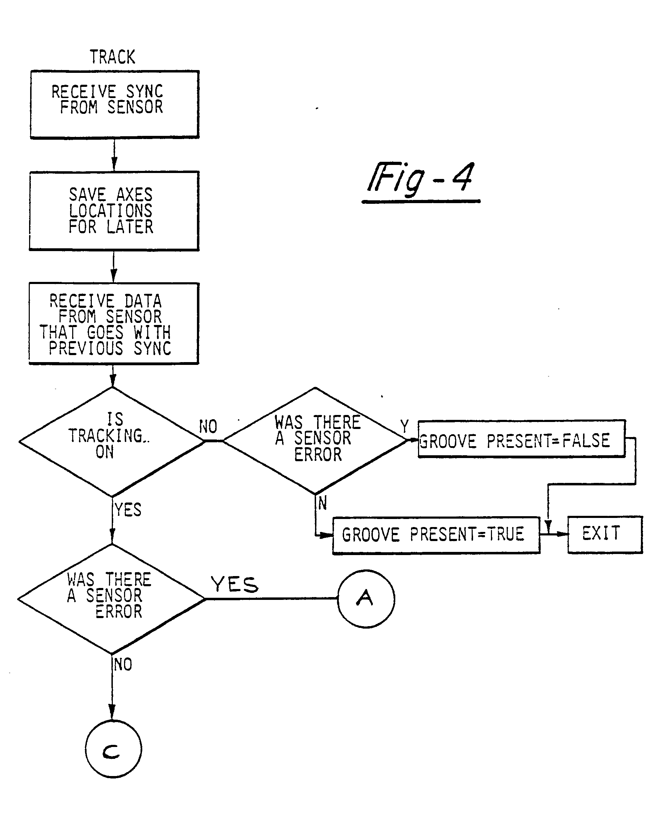

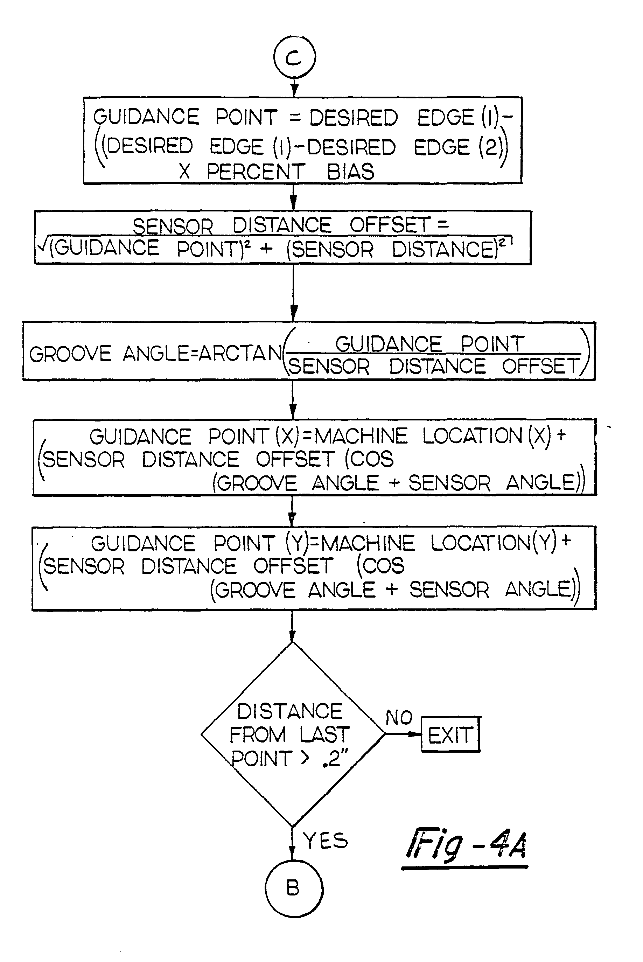

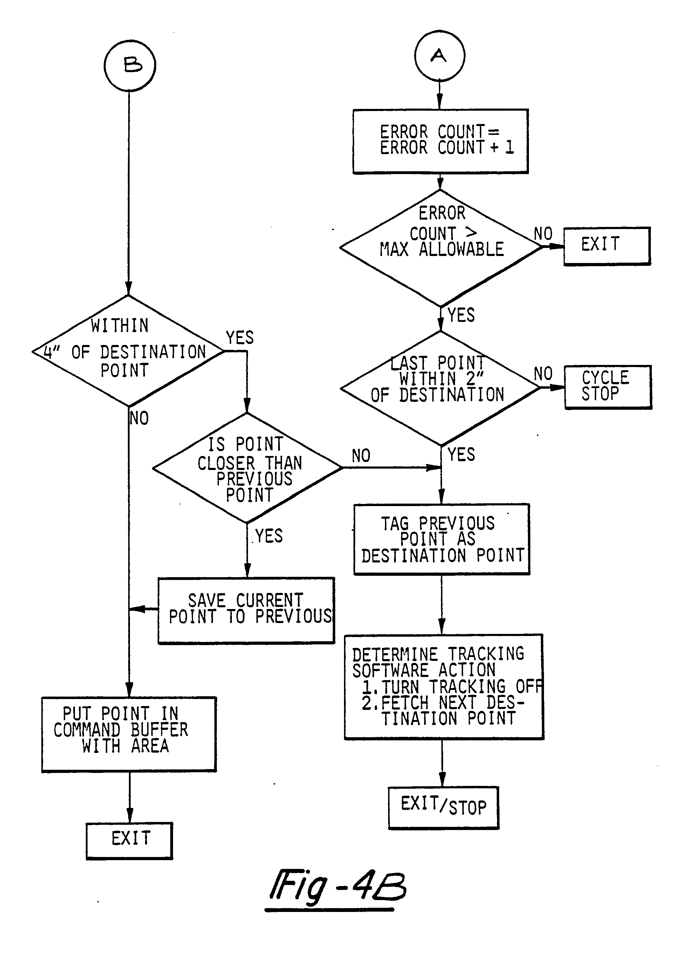

The camera micro computer 28 is essentially free running, repeating its software cyclicly with no direction from the LSI-11 computer. Once it has finished analyzing an image and transmitted the resulting data to the control computer 38, it takes another image and repeats the cycle. A carriage return character is sent to the control computer 38 to notify it that a new image is being taken. The character catching routine in the control computer 38 recognizes the carriage return as a sync character and saves the current location of all the axis for later use. Once all of the data from the current image has been received by the character catching routine, it activates the routine "TRACK", a representative embodiment of which is shown in flowchart form in Fig. 4.

If tracking is not enabled, then TRACK simply sets a software flag "true" if a groove is in the field of view of the camera and "false" if not. If tracking is enabled, then the sensor data and the axis locations saved when the image was taken are used to determine the location of the weld groove. First, the vertical position of the groove is calculated using an average of the right and left edge vertical camera data. This position is then converted from camera units to engineering units. Then the distance from the torch to the laser beam is adjusted based upon the height and the known angle of the laser beam. A combination of the center of area of the groove and the location of the left edge, or right edge, or the center of area and a guidance bias is used to calculate the coordinates of the groove. Standard textbook trig functions are used. The distance from this guidance point to the previously used guidance point is then checked and if that distance is less than some arbitrary minimum, the current point is discarded and the TRACK routine is suspended. If the distance is greater than the minimum allowable value, a test is made to determine if the previously used point is the closest possible point to the current program point. If so, that point is tagged as being the program point and the interpreter for the sensor is called. For the typical case, the next instruction would be to interpret the weld stop program. The first instruction in that program is currently the "tracking off" instruction which causes the whole tracking process to cease.

If, however, the previous point was not the closest to the program point, then the current point is placed in the first in, first out buffer (FIFO). The area of the groove at this point is also placed in the FIFO for use by the fill control routine when the weld torch nears the associated X, Y, Z point.

The "SWING" routine is also called and maintains the sensor approximately centered over the groove ahead of the torch. The swing routine computes the equation of a line which approximates the path of the upcoming groove from some of the most recent points placed into the FIFO. The intersections of a circle whose radius is the distance between the troch and the point where the laser beam strikes the workpiece are calculated. The center of circle is placed at the point toward which the torch is currently travelling. The proper intersection is chosen and the correct sensor head angle is calculated to place

9  EP 0 211 844 B1  10

the sensor over that intersection. This angle is made part of the current servo command so that as the torch reaches the current command point, the sensor also reaches the desired angle.

The above processes continue until they are stopped by a "tracking off" instruction in the program, a stop button command signal, or the completion of a predetermined number of continuous sensor errors.

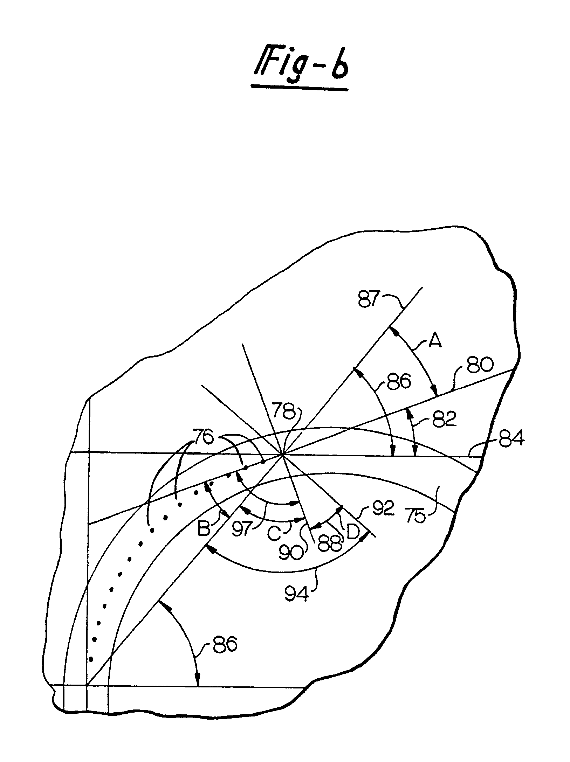

The points are removed from the FIFO as needed and command the computer servo software to move the machine axis. If the system is welding and the fill control is on, the area is also removed from the FIFO and used by the subroutine called "FILCTL". Figs. 5 and 5A illustrate a flowchart of the FILCTL subroutine and can best be explained in conjunction with the stylized top view of the weld groove 75 shown in Fig. 6. The FILCTL routine begins by computing the change in X and Y coordinates from a previously computed guidance point 76 to the current guidance point 78. The change in X and Y coordinates are used to compute the angle 82 between a line 80 defined by the guidance points 76, 78 and the ordinate 84 of the cartesian coordinate system. A line 87 illustrates the angular relationship between the welding torch 14 and optical system 10, 12 relative to the ordinate 84 and is monitored by the encoders 26 for calculating an approximation of the skew angle D. The FILCTL program calculates the skew angle 88 as the absolute value of the difference between the torch angle 86 and groove angle 82. This method provides a good approximation of the skew angle D because the line 80 is substantially parallel to the tangent of the radius of the weld groove at the current guidance point. A desired scan path 90 can then be defined as passing through the current guidance point 78 perpendicular to the line 80; consequently, the desired path 90 is positioned normal to the weld groove 75 and provides a true reading of the width of the groove. The actual laser scan path 92 is normal to the line 87 and crosses the weld groove at an angle 88 skewed from the desired path 90 resulting in the detection of an erroneously large weld groove 75. A simple geometric proof is required to show that the torch angle 86 minus the groove angle 82 is equivalent to the skew angle D. First, from the drawing it can easily be concluded that the difference between the angles 86, 82 is an angle A. The angle A is obviously equivalent to an angle B. The angle 97 has previously been set as 90°; therefor, an angle C is equivalent to 90° minus the angle B. Similarly, the angle 94 has also been set as 90°; therefor, the skew angle D is equivalent to 90° minus the angle C. From this it is easily deduced that the skew angle D is equal to the difference of the groove and torch angles 82, 86.

More simply:

$$\angle A = \angle B$$
$$\angle C = 90° - \angle B$$
$$\angle D = 90° - \angle C$$
$$\angle D = 90° - (90° - \angle B)$$
$$\angle D = \angle B$$

$$\therefore$$
$$\angle D = \angle A.$$

Once the skew angle D has been computed, then the FILCTL routine multiplies the absolute value of the cosine of the skew angle D by the measured groove area to obtain a corrected actual groove area. The absolute values are taken to remove the negative value in the case where the weld groove angle curves in the opposite direction to that shown in Fig. 6. In an instance where the apparatus 10 is welding a linear portion of a groove such that a skew angle does not exist, then the groove and torch angles 82, 86 will be equivalent and the skew angle D will be zero. The cosine of zero is equal to one and the actual groove area will be equivalent to the measured groove area.

The FILCTL program continues and computes a tentative welding torch travel speed based on the maximum allowable wire feed speed, the volume of wire per inch, and the actual groove area. The tentative speed is then compared to a range of allowable speeds. If the tentative speed is within the range, then the wire feed speed is recalculated to be the maximum allowable speed. If, however, the tentative speed is outside the allowable range, then tentative speed is set to the closest value of either the maximum or minimum torch travel speed. The wire feed speed is then calculated based on the new tentative speed and compared to a range of allowable wire feed speeds. If the wire feed speed is outside of the allowable range, then the wire speed is set to the closest value of the maximum and minimum allowable wire feed speeds. The welding voltage is then linearly interpolated based on the computed wire feed speed and torch travel speed.

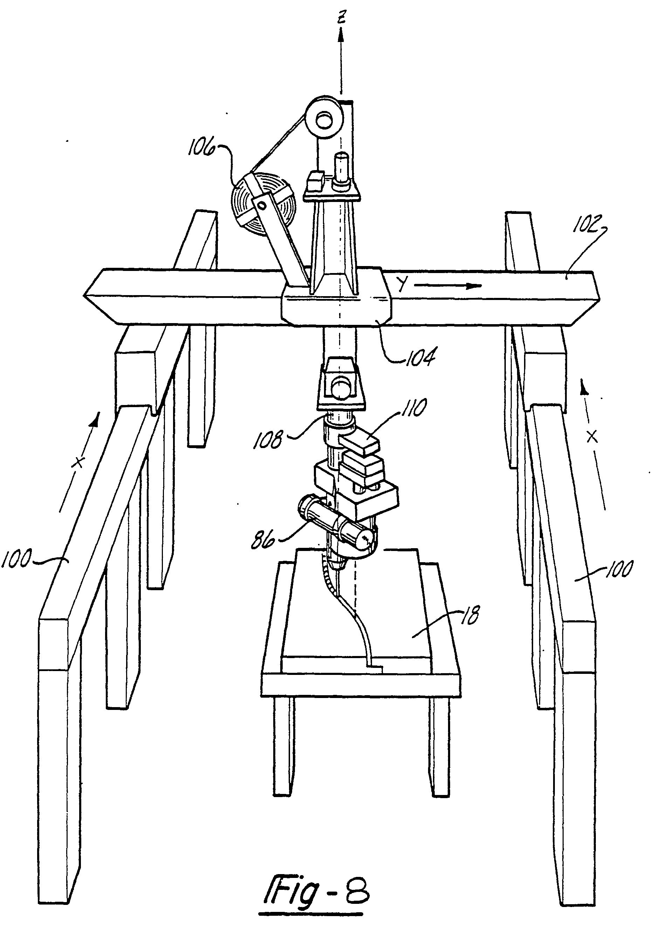

Fig. 7 is a view of a preferred, actual embodiment of the system of Figs. 1 and 3 of a single torch MG welder. The platform 16 comprises a servo-positionable structure depending from a cross beam and is movable vertically relative to the workpiece 18 along the Z-axis. A plate 80 has depending arms 82 and 84 and carries a conventional low-power helium-neon laser 86 which projects its output beam laterally via mirrors to the scan-projector 10 containing the galvo-driven mirror which aims the beam downwardly toward the groove 88 in the workpiece 18.

A camera lens 90 of the camera 12 is stationed about 10 inches above the work 18 and focuses on a spot about four inches ahead of the torch 14. A filter 91 mounted on the lens end of the camera 12 passes light only at 632.8 nanometers; i.e., the wavelength of the laser output, and filters out glare from the welding torch 15 which leaks out from under a shield 92 carried at the bottom of the plate 94. A vacuum system comprising one or more hoses 96 removes smoke from the weld area.

Swing motion about the Z-axis is produced by a motor 110. Since the Z-axis runs through the center of the torch, swing movements do not affect the X, Y, Z coordinates of the torch itself. Such movements, do, however, affect the X, Y

6

coordinates of the scan area and thereby permit the optical system 10, 12 to follow curves in the groove 88 ahead of the weld coordinates.

Fig. 8 shows in greater detail the physical arrangement of the guidance system. X-axis displacement is provided by spaced parallel rails 100 raised above the floor and open-ended to provide entry and exit for the work: A Y-axis support 102 spans the two rails 100 and is mounted thereon by way of wheels to allow displacement. A linear gear-tooth track runs along one of the rails and is engaged by a pinion gear driven by a belt-connected motor and gear-box combination. An encoder above the motor generates pulses representing displacement. The Y-axis carriage 104 is similarly mounted on support 102 and carries the wire reel 106 and wire feed motore. A Z-axis drive 108 raises and lowers the platform 16 relative to support 102 and carriage 104 for height control. The swing axis system is described previously.

In the overall operation of a preferred embodiment of the adaptive welding apparatus 8, assume that a curved portion of a curvilinear weld groove is being detected and welded. The optical system 10, 12 preceeds the welding torch 14 by about four inches, projecting a spot of light onto the surface of a workpiece and scanning the light linearly across a weld groove. Light reflected from the surface of the workpiece is received by the camera 12 which employs the principal of triangulation to extract topographical information from the points of peak reflected intensity. The topographical information yields the weld groove position and cross sectional area. The software routine, SWING, constantly attempts to center the laser scan path across the weld groove; however, by rotating the optical system 10, 12 about the welding torch 14, the laser scan path will traverse the weld groove along a line skewed from the path necessary to detect actual groove width. The skewed scan path will detect an erroneously wide groove and then calculate a groove cross sectional area that will cause the system to deposit weld material at an excessive rate, overfilling the groove. The software routine, FILCTL, acts to compensate for the skewed scan path by estimating the desired linear scan path from both present and past information. Once the desired scan path is known, then the actual scan path is measured and the skew angle can be analytically calculated. The actual scan path can be mathematically rotated to the desired scan path by multiplying the actual path by the cosine of the skew angle; however, in this embodiment an attempt is made to rotate the actual area to the desired scan path by multiplying by the cosine of the skew angle. Unless the groove has a rectangular cross section, then a certain amount of error is introduced by attempting to rotate the actual area, but the error is considered to be insignificant and has little effect on the actual weld material deposition rate.

Other aspects, objects, advantages, and uses of this apparatus can be obtained from a study of the drawings, the disclosure, and the appended claims.

## Claims

1. A welding apparatus (8) for guiding a welding torch (14) along a weld groove (75), scanning a sensor (13) along a preselected pathway extending across the weld groove (75) at a preselected distance from the welding torch (14), and adaptively controlling at least one of a weld voltage, wire feed speed, and welding torch travel speed in response to the scanned weld groove cross-sectional area, comprising:

first means (27) for delivering first signals in response to the position and configuration of the weld groove cross section;

second means (37) for receiving the first signals, calculating the weld groove cross sectional area, and delivering a second signal in response to the magnitude of the calculated area;

means for calculating, on the basis of the signals from the first means, the coordinates of a series of guidance points each representing a portion of the weld groove (75) ahead of the torch (14);

third means (41) for receiving the second signal, calculating the magnitude of a first angle (82) formed by the intersection of a preselected reference line and a first line (80) extending through the most recently determined guidance point (78) and a previously determined guidance point (76), calculating the magnitude of a second angle (86) formed by the intersection of the preselected reference line and a second line extending through the most recently determined guidance point (78) and the current welding torch location, calculating a general angular deviation from the difference between the first and second angles, altering the second signal in response to the magnitude of the angular deviation, and delivering a resulting third signal; and

fourth means (43) for receiving the third signal and controlling the volume of weld material subsequently deposited in the weld groove adjacent to the current guidance point in response to the third signal.

2. Apparatus (8) according to claim 1, wherein the third signal is the product of the second signal and the absolute value of the cosine of the angular deviation.

3. Apparatus (8) according to claim 1 or claim 2, wherein the fourth means controls the volume of weld material deposited in the weld groove in response to controlling at least one of the wire feed speed and the welding torch travel speed.

4. A welding method which includes guiding a welding torch (14) along a weld groove (75), scanning a sensor (13) along a preselected pathway extending across the weld groove (75) at a preselected distance from the welding torch (14), and adaptively controlling at least one of a weld voltage, wire feed speed, and welding torch travel speed in response to the scanned weld groove cross-sectional area, which comprises:

calculating the coordinates of a series of guidance points each representing a portion of the weld groove (75) ahead of the torch;

detecting the apparent cross sectional area of the weld groove (75);

calculating the magnitude of a first angle formed by the intersection of a preselected reference line and a first line extending through the most recently determined guidance point (78) and a previously determined guidance point (76);

calculating the magnitude of a second angle formed by the intersection of the preselected reference line and a second line extending through the most recently determined guidance point (78) and the current welding torch location;

calculating a general angular deviation from the difference between the first and second angles; and,

controlling the volume of weld material subsequently deposited in the weld groove adjacent to the current guidance point in response to the third signal.

5. A method according to claim 4 for adaptively controlling the wire feed rate, torch velocity, and weld voltage of a welding apparatus (8) to control the deposition of material within a weld groove (75), which includes:

using the magnitude of the apparent cross sectional area and the magnitude of the general angular deviation to produce a true cross-sectional area;

calculating a tentative torch speed in response to both the magnitude of the true cross sectional area and a preselected maximum wire feed rate;

comparing the tentative torch speed to a preselected maximum and minimum allowable torch speed;

altering the tentative torch speed to a value within the range of the minimum and maximum torch speeds in response to the tentative torch speed being outside the range of the maximum and minimum allowable torch speeds;

delivering a torch speed signal having a magnitude responsive to the magnitude of the tentative torch speed;

calculating a wire feed rate responsive to both the cross sectional area and the tentative torch speed;

comparing the wire feed rate to a preselected maximum and minimum allowable wire feed rate;

altering the wire feed rate to a value within the range of the minimum and maximum wire feed rates in response to the calculated wire feed rate being outside the range of the maximum and minimum allowable wire feed rates;

delivering a wire feed rate signal having a magnitude responsive to the magnitude of the wire feed rate;

calculating the weld voltage in response to the magnitude of the wire feed rate;

delivering a weld voltage signal having a magnitude responsive to the magnitude of the calculated weld voltage;

controlling the speed of the welding torch in response to the magnitude of the desired torch speed signal;

controlling the wire feed rate in response to the magnitude of the wire feed rate signal; and controlling the weld voltage in response to the magnitude of the weld voltage signal.

6. A method according to claim 5, wherein the step of altering the tentative speed includes setting the tentative speed to the minimum allowable torch speed in response to the tentative torch speed being less than the minimum allowable torch speed.

7. A method according to claim 5 or claim 6, wherein the step of altering the tentative speed includes setting the tentative speed to the maximum allowable torch speed in response to the tentative torch speed being greater than the maximum allowable torch speed.

8. The method according to any of claims 5 to 7, wherein the step of altering the wire feed rate include setting the wire feed rate to the minimum allowable wire feed rate in response to the wire feed rate being less than the minimum allowable wire feed rate.

9. The method according to any of claims 5 to 8, wherein the step of altering the wire feed rate includes setting the wire feed rate to the maximum allowable wire feed rate in response to the wire feed rate being greater than the maximum allowable wire feed rate.

10. The method according to any of claims 5 to 9, wherein the step of calculating the weld voltage includes linearly interpolating the weld voltage between a minimum and maximum value in response to the magnitude of the wire feed rate.

**Patentansprüche**

1. Schweißvorrichtung (8) zum Führen eines Schweißbrenners (14) längs einer Schweißnut (75), Abtasten eines Sensors (13) längs einer vorgewählten sich über die Schweißnut (75) erstreckenden Bahn mit einem vorgewählten Abstand von dem Schweißbrenner (14), und adaptive Steuerung von mindestens eine der folgenden Größen: einer Schweißspannung, einer Drahtzuführgeschwindigkeit und der Schweißbrennerlaufgeschwindigkeit, und zwar infolge der abgetasteten Querschnittsfläche der Schweißnut, wobei folgendes vorgesehen ist:

erste Mittel (27) zur Lieferung erster Signale infolge der Position und Konfiguration des Schweißnutquerschnitts;

zweite Mittel (37) zum Empfangen der ersten Signale, Berechnung der Schweißnutquerschnittsfläche und Lieferung eines zweiten Signals infolge der Größe der berechneten Fläche;

Mittel zur Berechnung auf der Basis der Signale der ersten Mittel, die Koordinaten einer Reihe von Führungspunkten von denen jeder einen Teil der Schweißnut (75) vor dem Brenner (14) repräsentiert;

dritte Mittel (41) zum Empfang des zweiten Signals, Berechnung der Größe eines ersten Winkels (82) gebildet durch den Schnitt einer vorgewählten Bezugslinie und einer ersten Linie (80), die sich durch den zuletzt bestimmten Führungspunkt (78) und einen zuvor bestimmten Führungspunkt (76) erstreckt, Berechnung der Größe eines zweiten Winkels (86) gebildet durch den Schnitt der vorgewählten Bezugslinie und einer zweiten Linie, die sich durch den zuletzt bestimmten Führungspunkt (78) und die laufende Schweißbrennerstelle erstreckt, Berechnung einer allgemeinen Winkelabweichung aus der Differenz zwischen den ersten und zweiten Winkeln, Änderung des zweiten Signals infolge der Größe der Winkelabweichung, und Lieferung eines sich ergebenden dritten Signals; und

vierte Mittel (43) zum Empfang des dritten Signals und zum Steuern des Volumens des darauffolgend in der Schweißnut benachbart zum laufenden Führungspunkt abgelegten Schweißmaterials infolge des dritten Signals.

2. Vorrichtung (8) nach Anspruch 1, wobei das dritte Signal das Produkt des zweiten Signals und des Absolutwerts des Kosinus der Winkelabweichung ist.

3. Vorrichtung (8) nach Anspruch 1 oder 2, wobei die vierten Mittel das Volumen des in der Schweißnut abgeschiedenen Schweißmaterials sind, und zwar infolge der Steuerung von mindestens einer der folgenden Größen: der Drahtzuführgeschwindigkeit und der Schweißbrennerlaufgeschwindigkeit.

4. Schweißverfahren bei dem ein Schweißbrenner (14) längs einer Schweißnut (75) geführt wird, bei dem eine Sensor (13) eine Abtastung vornimmt und zwar längs einer vorgewählten Bahn, die sich über die Schweißnut (75) mit einem vorgewählten Abstand von dem Schnweißbrenner (14) erstreckt und bie dem ferner mindestens eine der folgenden Größen adaptive gesteuert wird: die Schweißspannung, die Drahtzuführgeschwindigkeit und die Schweißbrennerlaufgeschwindigkeit und zwar infolge der Querschnittsfläche der abgetasteten Schweißnut, wobei folgendes vorgesehen ist:

Berechnung der Koordinaten einer Reihe von Führungspunkten deren jeder einen Teil der Schweißnut (75) vor dem Schneidbrenner repräsentiert;

Detektieren der vorhandenen Querschnittsfläche der Schweißnut (75);

Berechnung der Größe eines ersten Winkels gebildet durch den Schnitt einer vorgewählten Bezugslinie und einer ersten Linie, die sich durch den zuletzt bestimmten Führungspunkt (78) und einen zuvor bestimmten Führungspunkt (76) erstreckt;

Berechnung der Größe eines zweiten Winkels gebildet durch den Schnitt der vorgewählten Bezugslinie und einer zweiten Linie, die sich durch den zuletzt bestimmten Führungspunkt (78) und die derzeitige Schweißbrennerlage erstreckt;

Berechnung einer allgemeinen Winkelabweichung aus der Differenz aus den ersten und zweiten Winkeln; und

Steuerung des Volumens des Schweißmaterials welches darauffolgend in der Schweißnut benachbart zu dem derzeitigen Führungspunkt abgeschieden wird und zwar infolge des dritten Signals.

5. Verfahren nach Anspruch 4 zur adaptiven Steuerung der Drahtzuführrate, der Brennergeschwindigkeit und der Schweißspannung einer Schweißvorrichtung (8) zur Steuerung der Abscheidung von Material innerhalb einer Schweißnut (75), wobei folgendes vorgesehen ist:

Verwendung der Gröe der vorliegenden Querschnittsfläche und der Größe der allgemeinen Winkelabweichung zu Erzeugung einer Warenquerschnittsfläche;

Berechnung einer voraussichtlichen Brennergeschwindigkeit infolge sowohl der Größe der Warenquerschnittsfläche als auch einer vorgewählten maximalen Drahtzuführgeschwindigkeit;

Vergleichen der voraussichtlichen Brennergeschwindigkeit mit einer vorgewählten maximal oder minimal zulässigen Brennergeschwindigkeit;

Änderung der voraussichtlichen Brennergeschwindigkeit auf einen Wert innerhalb des Bereichs der minimalen und maximalen Brennergeschwindigkeit, wenn die voraussichtliche Brennergeschwindigkeit außerhalb des Bereichs der maximal und minimal zulässigen Brennergeschwindigkeiten ist;

Lieferung eines Brennergeschwindigkeitssignals mit einer Größe, die auf die Größe der voraussichtlichen Brennergeschwindigkeit anspricht;

Berechnung einer Drahtzuführgeschwindigkeit entsprechend sowohl der Querschnittsfläche als auch der voraussichtlichen Brennergeschwindigkeit;

Vergleichen der Drahtzuführgeschwindigkeit (Rate) mit einem vorgewählten Maximum und Minimum der zulässigen Drahtzuführgeschwindigkeit;

Änderung der Drahtzuführgeschwindigkeit auf einen Wert innerhalb des Bereichs der minimalen und maximalen Drahtzuführgeschwindigkeit, wenn die berechnete Drahtzuführgeschwindigkeit außerhalb des Bereichs der maximalen und minimalen zulässigen Drahtzuführgeschwindigkeiten liegt;

Lieferung eines Drahtzuführgeschwindigkeitsignals mit einer Größe ansprechend auf die Größe der Drahtzuführgeschwindigkeit;

Berechnung der Schweißspannung infolge der Größe der Drahtzuführgeschwindigkeit;

Lieferung eines Schweißspannungssignals mit einer Größe ansprechend auf die Größe der berechneten Schweißspannung;

Steuerung der Geschwindigkeit des Schweißbrenners infolge der Größe des gewünschten Brennergeschwindigkeitssignals;

Steuerung der Drahtzuführgeschwindigkeit infolge der Größe des Drahtzuführgeschwindigkeitssignals; und

Steuerung der Schweißspannung infolge der Größe des Schweißspannungssignals.

6. Verfahren nach Anspruch 5, wobei der Schritt der Änderung der voraussichtlichen Geschwindigkeit das Einstellen der voraussichtlichen Geschwindigkeit auf die minimal zulässige Brennergeschwindigkeit umfaßt, wenn die voraussichtliche Brennergeschwindigkeit kleiner ist als die minimal zulässige Brennergeschwindigkeit.

7. Verfahren nach Anspruch 5 oder 6, woebi der Schritt des Änderns der voraussichtlichen Geschwindigkeit das Einstellen der voraussichtlichen Geschwindigkeit auf die maximal zulässige Brennergeschwindigkeit umfaßt, wenn die voraussichtliche Brennergeschwindigkeit größer ist als die maximale zulässige Brennergeschwindigkeit.

8. Verfahren nach einem der Ansprüche 5 bis 7, wobei der Schritt der Änderung der Drahtzuführgeschwindigkeit die Einstellung der Drahtzuführgeschwindigkeit auf die minimal zulässige Drahtzuführgeschwindigkeit umfaßt, wenn die Drahtzuführgeschwindigkeit kleiner ist als die minimal zulässige Drahtzuführgeschwindigkeit.

9. Verfahren nach einem der Ansprüche 5 bis 8, wobei der Schritt der Änderung der Drahtzuführgeschwindigkeit die Einstellung der Drahtzuführgeschwindigkeit auf das Maximum der zulässigen Drahtzuführgeschwindigkeit umfaßt, wenn die Drahtzuführgeschwindigkeit größer ist als die maximal zulässige Drahtzuführgeschwindigkeit.

10. Verfahren nach einem der Ansprüche 5 bis 9, wobei der Schritt der Berechnung der Schweißspannung die lineare Interpolation der Schweißspannung zwischen einem Minimal- und Maximalwert umfaßt, und zwar infolge der Größe der Drahtzuführgeschwindigkeit.

**Revendications**

1. Appareil de soudage (8) destiné à guider un chalumeau (14) le long d'une rainure de soudage (75), à balayer à l'aide d'un détecteur (13) un chemin prédéterminé s'étendant en travers de la rainure de soudage (75) à une distance présélectionnée du chalumeau (14) et à commander de manière adaptative au moins l'un des paramètres choisis parmi la tension de soudage, la vitesse d'alimentation en fil et la vitesse de déplacement du chalumeau, en fonction de la superficie de la section transversale de la rainure de soudage balayée, comprenant:

un premier moyen (27) destiné à fournir des premiers signaux en fonction de la position et de la configuration de la section transversale de la rainure de soudage;

un second moyen (37) destiné à recevoir les premiers signaux, à calculer la superficie de la section transversale de la rainure de soudage et à fournir un second signal en fonction de la grandeur de la superficie calculée;

un moyen destiné à calculer, sur la base des signaux en provenance du premier moyen, les coordonnées d'une série de points de repère représentant chacun une partie de la rainure de soudage (75) située en avant du chalumeau (14);

un troisième moyen (41) destiné à recevoir le second signal, à calculer la grandeur d'un premier angle (82) formé par l'intersection d'une ligne de référence présélectionnée et d'une première ligne (80) passant par le point de repère déterminé le plus récemment (78) et un point de repère déterminé précédemment (76), à calculer le grandeur d'un second angle (86) formé par l'intersection de la ligne de référence présélectionnée et d'une seconde ligne passant par le point de repère déterminé le plus récemment (78) et l'emplacement courant du chalumeau, à calculer un écart angulaire général à partir de la différence entre les premier et second angles, à modifier le second signal en fonction de la grandeur de l'écart angulaire, et à fournir un troisième signal résultant; et un quatrième moyen (43) destiné à recevoir le troisième signal et à commander le volume de matière de soudage déposée par la suite dans la rainure de soudage à proximité du point de repère courant en réponse au troisième signal.

2. Appareil (8) selon la revendication 1, dans lequel le troisième signal est le produit de second signal et de la valeur absolue du cosinus de l'écart angulaire.

3. Appareil (8) selon la revendication 1 ou la revendication 2, dans lequel le quatrième moyen commande le volume de la matière de soudage déposée dans la rainure de soudage en réponse à la commande d'au moins l'un des paramètres choisis parmi la vitesse d'alimentation en fil et la vitesse de déplacement du chalumeau.

4. Méthode de soudage qui comprend le guidage d'un chalumeau (14) le long d'une rainure de soudage (75), le balayage à l'aide d'un détecteur (13) d'un chemin présélectionné s'étendant en travers de la rainure de soudage (75) à une distance présélectionnée du chalumeau (14), et la commande adaptative d'au moins l'un des paramètres choisis parmi la tension de soudage, la vitesse d'alimentation en fil et la vitesse de déplacement du chalumeau en fonction de la superficie de la section transversale de la rainure de soudage balayée, cette méthode consistant à:

calculer les coordonnées d'une série de points de repère représentant chacun une partie de la rainure de soudage (75) en avant du chalumeau;

détecter la superficie de la section transversale apparente de la rainure de soudage (75);

calculer la grandeur d'un premier angle formé par l'intersection d'une ligne de référence présélectionnée et d'une première ligne passant par le point de repère déterminé le plus récemment (78) et un point de repère déterminé précédemment (76);

calculer la grandeur d'un second angle formé par l'intersection de la ligne de référence présélectionnée et d'une seconde ligne passant par le point de repère déterminé le plus récemment (78) et l'emplacement courant du chalumeau;

calculer un écart angulaire général à partir de la différence entre les premier et second angles; et commander le volume de matière de soudage déposée par la suite dans la rainure de soudage à proximité du point de repère courant en réponse au troisième signal.

5. Méthode selon la revendication 4 destinée à commander de manière adaptative la vitesse d'alimentation en fil, la vitesse de déplacement du chalumeau et la tension de soudage d'un appareil de soudage (8) pour commander le dépôt de matière à l'intérieur d'une rainure de soudage (75), consistant à:

utiliser la grandeur de la superficie de la section transversale apparente et la grandeur de l'écart angulaire général pour obtenir une superficie de la section transversale vraie;

calculer une vitesse de déplacement provisoire du chalumeau en fonction de la grandeur de la superficie de la section transversale vraie et d'une vitesse d'alimentation en fil maximale présélectionnée;

comparer la vitesse de déplacement provisoire du chalumeau à des vitesses de déplacement admissibles maximale et minimale présélectionnées du chalumeau;

modifier la vitesse de déplacement provisoire du chalumeau de manière à obtenir une valeur située à l'intérieur de la plage des vitesses de déplacement minimale et maximale du chalumeau lorsque de la vitesse de déplacement provisoire du chalumeau est en dehors de la plage des vitesses de déplacement admissibles maximale et minimale du chalumeau;

fournir un signal de vitesse de déplacement du chalumeau ayant une grandeur qui est fonction de la grandeur de la vitesse de déplacement provisoire du chalumeau;

calculer une vitesse d'alimentation en fil qui est fonction à la fois de la superficie de la section transversale et de la vitesse de déplacement provisoire du chalumeau;

comparer la vitesse d'alimentation en fil à des vitesses d'alimentation en fil admissibles maximale et minimale présélectionnées;

modifier la vitesse d'alimentation en fil pour obtenir une valeur située à l'intérieur de la plage des vitesses d'alimentation en fil minimale et maximale lorsque la vitesse d'alimentation en fil calculée est en dehors de la plage des vitesses d'alimentation en fil admissibles maximale et minimale;

fournir un signal de vitesse d'alimentation en fil ayant une grandeur qui est fonction de la grandeur de la vitesse d'alimentation en fil;

calculer la tension de soudage en fonction de la grandeur de la vitesse d'alimentation en fil;

fournir un signal de tension de soudage ayant une grandeur qui est fonction de la grandeur de la tension de soudage calculée;

commander la vitesse du chalumeau en fonction de la grandeur du signal de vitesse de déplacement souhaitée du chalumeau;

commander la vitesse d'alimentation en fil en fonction de la grandeur du signal de vitesse d'alimentation en fil; et

commander la tension de soudage en fonction de la grandeur du signal de tension de soudage.

6. Méthode selon la revendication 5, dans laquelle l'étape de modification de la vitesse provisoire comprend le réglage de la vitesse provisoire sur la vitesse de déplacement admissible minimale du chalumeau lorsque la vitesse de déplacement provisoire du chalumeau est inférieure à la vitesse de déplacement minimale admissible du chalumeau.

7. Méthode selon la revendication 5 ou la revendication 6, dans laquelle l'étape de modification de la vitesse provisoire comprend le réglage de la vitesse provisoire sur la vitesse de déplacement maximale admissible du chalumeau lorsque la vitesse de déplacement provisoire du chalumeau est supérieure à la vitesse de déplacement maximale admissible du chalumeau.

8. Méthode selon l'une quelconque des revendications 5 à 7, dans laquelle l'étape de modification de la vitesse d'alimentation en fil comprend le réglage de la vitesse d'alimentation en fil sur la vitesse d'alimentation en fil minimale admissible lorsque la vitesse d'alimentation en fil est inférieure à la vitesse d'alimentation en fil minimale admissible.

9. Méthode selon l'une quelconque des revendications 5 à 8, dans laquelle l'étape de modification de la vitesse d'alimentation en fil comprend le réglage de la vitesse d'alimentation en fil sur la vitesse d'alimentation en fil maximale admissible lorsque la vitesse d'alimentation en fil est supérieure à la vitesse d'alimentation en fil maximale admissible.

10. Méthode selon l'une quelconque des revendications 5 à 9, dans laquelle l'étape de calcul de la tension de soudage comprend l'interpolation linéaire de la tension de soudage entre une valeur minimale et une valeur maximale en fonction de la grandeur de la vitesse d'alimentation en fil.

Fig-1

10

TV SCAN

LASER SPOT SCAN

18

*Fig-2*

*Fig-2A*

TV SCAN NO.

1
3
5
7
9
11
13

LOCATION OF PEAK
INTENSITY

2

16

82
80
84
*Fig-7*
86
96
10
90  91
94
14
88
92
18

2

_Fig - 3_

INTEL 8085    28

LATCH

36

INTENSITY

PIXEL CLOCK →

62    12    64    14

PIXEL CLOCK → CAMERA    A COMPARATOR B → A>B    COUNTER

66    72

8-BIT LATCH    LATCH

68    10

DELAY

EP 0 211 844 B1

TRACK

```
┌─────────────────┐
│  RECEIVE SYNC   │
│  FROM SENSOR    │
└─────────────────┘
```

```
┌─────────────────┐
│   SAVE AXES     │
│   LOCATIONS     │
│   FOR LATER     │
└─────────────────┘
```

```
┌─────────────────┐
│  RECEIVE DATA   │
│  FROM SENSOR    │
│ THAT GOES WITH  │
│ PREVIOUS SYNC   │
└─────────────────┘
```

*Fig - 4*

IS TRACKING ON — NO → WAS THERE A SENSOR ERROR — Y → GROOVE PRESENT=FALSE

WAS THERE A SENSOR ERROR — N → GROOVE PRESENT=TRUE → EXIT

IS TRACKING ON — YES

WAS THERE A SENSOR ERROR — YES → Ⓐ

WAS THERE A SENSOR ERROR — NO → Ⓒ

```
                              ┌───┐
                              │ C │
                              └─┬─┘
                                │
                                ▼
┌──────────────────────────────────────────────────────────────┐
│     GUIDANCE  POINT = DESIRED  EDGE (I)−                       │
│   ((DESIRED  EDGE (I)−DESIRED  EDGE (2))                       │
│              X  PERCENT  BIAS                                  │
└──────────────────────────────────────────────────────────────┘
                                │
                                ▼
┌──────────────────────────────────────────────────────────────┐
│         SENSOR  DISTANCE  OFFSET =                             │
│   √(GUIDANCE  POINT)² + (SENSOR  DISTANCE)²¯                   │
└──────────────────────────────────────────────────────────────┘
                                │
                                ▼
┌──────────────────────────────────────────────────────────────┐
│ GROOVE ANGLE=ARCTAN(      GUIDANCE  POINT        )            │
│                      (SENSOR  DISTANCE  OFFSET)              │
└──────────────────────────────────────────────────────────────┘
                                │
                                ▼
┌──────────────────────────────────────────────────────────────┐
│     GUIDANCE  POINT (X)=MACHINE  LOCATION (X)+                 │
│   (SENSOR  DISTANCE  OFFSET (COS                              │
│              (GROOVE  ANGLE + SENSOR  ANGLE))                  │
└──────────────────────────────────────────────────────────────┘
                                │
                                ▼
┌──────────────────────────────────────────────────────────────┐
│     GUIDANCE  POINT (Y)=MACHINE  LOCATION(Y)+                  │
│   (SENSOR  DISTANCE  OFFSET  (COS                             │
│              (GROOVE  ANGLE + SENSOR  ANGLE))                  │
└──────────────────────────────────────────────────────────────┘
                                │
                                ▼
                            ◇ DISTANCE ◇      NO    ┌──────┐
                            FROM LAST      ──────▶  │ EXIT │
                            POINT > .2"             └──────┘
                                │
                               YES
                                │
                              ┌───┐
                              │ B │
                              └───┘
```

$$\text{GUIDANCE POINT} = \text{DESIRED EDGE}(1) - ((\text{DESIRED EDGE}(1) - \text{DESIRED EDGE}(2)) \times \text{PERCENT BIAS}$$

$$\text{SENSOR DISTANCE OFFSET} = \sqrt{(\text{GUIDANCE POINT})^2 + (\text{SENSOR DISTANCE})^2}$$

$$\text{GROOVE ANGLE} = \text{ARCTAN}\left(\frac{\text{GUIDANCE POINT}}{\text{SENSOR DISTANCE OFFSET}}\right)$$

$$\text{GUIDANCE POINT}(X) = \text{MACHINE LOCATION}(X) + (\text{SENSOR DISTANCE OFFSET}(\text{COS}(\text{GROOVE ANGLE} + \text{SENSOR ANGLE}))$$

$$\text{GUIDANCE POINT}(Y) = \text{MACHINE LOCATION}(Y) + (\text{SENSOR DISTANCE OFFSET}(\text{COS}(\text{GROOVE ANGLE} + \text{SENSOR ANGLE}))$$

*Fig-4A*

_Fig -4B_

EP 0 211 844 B1

# Fig-5

START FILCTL

ΔX = CURRENT GUIDANCE POINT (X) – PREVIOUS GUIDANCE POINT (X)

ΔY = CURRENT GUIDANCE POINT (Y) – PREVIOUS GUIDANCE POINT (Y)

GROOVE ANGLE = ARCTAN $\left(\dfrac{\Delta Y}{\Delta X}\right)$

SKEW ANGLE = |TORCH ANGLE – GROOVE ANGLE|

ACTUAL GROOVE AREA = MEASURED GROOVE AREA X |COS. (SKEW ANGLE)|

$$\text{TENTATIVE SPEED} = \dfrac{\text{MAX. WIRE SPEED X WIRE VOLUME/INCH}}{\text{ACTUAL GROOVE AREA}}$$

TENTATIVE SPEED > MAX. ALLOWED SPEED

YES → TENTATIVE SPEED = MAX. SPEED

NO

FIG 5A

FIG 5A

7

FIG 5

FIG 5

Fig-5A

8

# *Fig-6*

IFig - 8